(19) **Europäisches Patentamt / European Patent Office / Office européen des brevets**

(11) **EP 4 579 793 A1**

(12) **EUROPEAN PATENT APPLICATION**
published in accordance with Art. 153(4) EPC

(43) Date of publication:
02.07.2025 Bulletin 2025/27

(21) Application number: 23857397.6

(22) Date of filing: 23.08.2023

(51) International Patent Classification (IPC):
*H01M 4/136* (2010.01)   *H01M 4/1397* (2010.01)
*H01M 4/38* (2006.01)   *H01M 4/62* (2006.01)
*H01M 10/0562* (2010.01)

(52) Cooperative Patent Classification (CPC):
**H01M 4/136; H01M 4/1397; H01M 4/38;**
**H01M 4/62;** H01M 10/0562; Y02E 60/10

(86) International application number:
**PCT/JP2023/030394**

(87) International publication number:
**WO 2024/043289 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 24.08.2022  JP 2022133663
07.02.2023  JP 2023017086

(71) Applicant: **Idemitsu Kosan Co.,Ltd.**
**Tokyo 100-8321 (JP)**

(72) Inventors:
• **HANIU, Yamato**
  **Tokyo 100-8321 (JP)**
• **HAMANO, Ai**
  **Tokyo 100-8321 (JP)**
• **HIGUCHI, Hiroyuki**
  **Tokyo 100-8321 (JP)**
• **ISHIHARA, Yu**
  **Tokyo 100-8321 (JP)**
• **FUJII, Yuta**
  **Tokyo 100-8321 (JP)**

(74) Representative: **Vossius & Partner**
**Patentanwälte Rechtsanwälte mbB**
**Siebertstrasse 3**
**81675 München (DE)**

(54) **POSITIVE ELECTRODE MIXTURE, METHOD FOR MANUFACTURING POSITIVE ELECTRODE MIXTURE, AND LITHIUM-ION BATTERY**

(57)   A positive electrode mixture including a conductive aid which is a carbon material, a sulfur-based active material, and a solid electrolyte, wherein a mapping overlap rate of carbon and phosphorus is 50% or more in elemental analysis using energy dispersive X-ray spectroscopy of an electron microscope image, and the positive electrode mixture has a diffraction peak A at $2\theta=20.2\pm0.5°$ and a diffraction peak B at $2\theta=41.1\pm0.8°$ in powder X-ray diffraction using CuKα ray.

**EP 4 579 793 A1**

**Description**

Technical Field

The present invention relates to a positive electrode mixture, a method for producing a positive electrode mixture, and a lithium-ion battery.

Specifically, the present invention relates to a positive electrode mixture capable of exhibiting excellent rate characteristics, a method for producing a positive electrode mixture, and a lithium-ion battery.

Background Art

When sulfur is combined with a conductive aid and a solid electrolyte (SE) in a sulfur-based positive electrode mixture used for a lithium-ion battery or the like, a reaction of sulfur which is insulative can sufficiently occur (Patent Document 1).

Related Art Documents

Patent Documents

[Patent Document 1] JP 2013-258079 A

Summary of the Invention

However, in the related art including Patent Document 1, there is room for further improvement from the viewpoint of further improving the rate characteristics thereof.

The present invention relates to a positive electrode mixture capable of exhibiting excellent rate characteristics, a method for producing a positive electrode mixture, and a lithium-ion battery.

As a result of intensive studies, the inventors have found that a positive electrode mixture satisfying the specific conditions can exhibit excellent rate characteristics, and have completed the present invention.

According to the present invention, the following positive electrode mixture and the like can be provided.

1. A positive electrode mixture comprising a conductive aid which is a carbon material, a sulfur-based active material, and a solid electrolyte,

wherein a mapping overlap rate of carbon and phosphorus is 50% or more in elemental analysis using energy dispersive X-ray spectroscopy of an electron microscope image, and
the positive electrode mixture has a diffraction peak A at $2\theta=20.2\pm0.5°$ and a diffraction peak B at $2\theta=41.1\pm0.8°$ in powder X-ray diffraction using CuK$\alpha$ ray.

2. The positive electrode mixture according to 1, which has a half width of the diffraction peak B of 1.15° or less.
3. The positive electrode mixture according to 1 or 2, wherein the solid electrolyte comprises a lithium atom, a phosphorus atom, a sulfur atom, a bromine atom and an iodine atom.
4. The positive electrode mixture according to any one of 1 to 3, which has a weight reduction rate of 2.5% or more in the case where the heating treatment is conducted at 190°C for two hours.
5. The positive electrode mixture according to any one of 1 to 4, which has a weight reduction rate of the sulfur-based active material of 7.0% or more in the case where the heating treatment is conducted at 190°C for two hours.
6. The positive electrode mixture according to any one of 1 to 5, which is obtained using a method for producing it comprising: adding a solid electrolyte to a sulfur-based active material and first-mixing them to obtain a first mixture, and adding a further solid electrolyte to the first mixture and second-mixing them to obtain a second mixture, wherein the second-mixing treatment is conducted with an energy smaller than that of the first-mixing treatment.
7. The positive electrode mixture according to 6, wherein they are mixed in first-mixing under the condition where amorphization of the solid electrolyte added in first-mixing is proceeded, and
they are mixed in second-mixing under the condition where the crystallinity of the solid electrolyte added in second-mixing does not disappear.
8. A method for producing a positive electrode mixture comprising:

adding a solid electrolyte to a sulfur-based active material and first-mixing them to obtain a first mixture, and
adding a further solid electrolyte to the first mixture and second-mixing them to obtain a second mixture,

wherein the second-mixing treatment is conducted with an energy smaller than that of the first-mixing treatment.

9. The method for producing a positive electrode mixture according to 8,

wherein they are mixed in first-mixing under the condition where amorphization of the solid electrolyte added in first-mixing is proceeded, and
they are mixed in second-mixing under the condition where the crystallinity of the solid electrolyte added in second-mixing does not disappear.

10. The method for producing a positive electrode mixture according to 8 or 9, wherein the positive electrode mixture according to any one of 1 to 7 is produced.
11. A lithium-ion battery comprising the positive electrode mixture according to any one of 1 to 7.

According to the present invention, it is possible to provide a positive electrode mixture capable of exhibiting excellent rate characteristics, a method for producing a positive electrode mixture, and a lithium-ion battery.

Brief Description of the Drawings

Fig. 1 is a diagram showing the results of energy dispersive X-ray spectroscopy (SEM-EDS analysis) of an electron microscope image of Example 1 (in Fig. 1 and Fig. 2 to Fig. 9 shown below, (a) thereof shows the result before image treatment, and (b) thereof shows the result after image treatment, and in addition, the symbol "C" represents a mapping of carbon, and the symbol "P" represents a mapping of phosphorus).

Fig. 2 is a diagram showing the results of SEM-EDS analysis of Example 2.

Fig. 3 is a diagram showing the results of SEM-EDS analysis of Comparative Example 1.

Fig. 4 is a diagram showing the results of SEM-EDS analysis of Comparative Example 2.

Fig. 5 is a diagram showing the results of SEM-EDS analysis of Example 3.

Fig. 6 is a diagram showing the results of SEM-EDS analysis of Example 4.

Fig. 7 is a diagram showing the results of SEM-EDS analysis of Example 5.

Fig. 8 is a diagram showing the results of SEM-EDS analysis of Example 6.

Fig. 9 is a diagram showing the results of SEM-EDS analysis of Example 7.

Fig. 10 is a diagram showing the results of the powder X-ray diffraction (XRD) of Examples 1 and 2, Comparative Examples 1 and 2, and Reference Example 1.

Fig. 11 is a diagram showing the results of XRD of Example 3 and Example 4.

Fig. 12 is a diagram showing the results of XRD of Example 5, Example 6 and Comparative Example 3.

Fig. 13 is a diagram showing the results of XRD of Example 7 and Comparative Example 4.

Mode for Carrying out the Invention

Hereinafter, the positive electrode mixture, the method for producing a positive electrode mixture, and the lithium-ion battery of the present invention will be described in detail.
In this specification, "x to y" represents a numerical range of "x or more and y or less". An upper limit value and a lower limit value described for the numerical range may be arbitrarily combined.

1. Positive electrode mixture

The positive electrode mixture according to an aspect of the present invention includes a conductive aid which is a carbon material, a sulfur-based active material, and a solid electrolyte, wherein a mapping overlap rate of carbon and phosphorus is 50% or more in elemental analysis using energy dispersive X-ray spectroscopy of an electron microscope image, and the positive electrode mixture has a diffraction peak A at $2\theta=20.2\pm0.5°$ and a diffraction peak B at $2\theta=41.1\pm0.8°$ in powder X-ray diffraction using CuKα ray.

According to the positive electrode mixture of the present aspect, excellent rate characteristics thereof can be achieved.

The above-described overlap rate is a value measured using each mapping of carbon and phosphorus subjected to smoothing, compressing, and binarizing treatment, and it is specifically a value measured using the method described in Examples. The powder X-ray diffraction is also conducted using the method described in the Examples.

In the positive electrode mixture according to the present aspect, the sulfur-based active material and the solid electrolyte are well mixed as specified by the above-described overlap rate. In addition, the crystallinity of the solid electrolyte is well maintained as specified by the above-described diffraction peaks, and therefore, it exhibits excellent Li$^+$ conductivity. As a result, it exhibits excellent rate characteristics.

The positive electrode mixture as the present aspect cannot be produced by the conventional art.

That is, when a method in which the solid electrolyte is added to a composite of sulfur and carbon and then they are mechanically mixed with strong energy is used, the crystallinity of the solid electrolyte is lowered by the mechanical mixing, and Li$^+$ conductivity is lowered to limit the improvement of the rate characteristics of the positive electrode mixture.

In addition, as in the art of Patent Document 1, when the positive electrode mixture is produced by mechanical mixing with weak energy, the composite of sulfur and carbon, and the solid electrolyte cannot be mixed satisfactorily instead of suppressing the decrease in crystallinity of the solid electrolyte, and as a result, it is more difficult to improve the rate characteristics.

In one embodiment, the above-described overlap rate is preferably 50% or more, more preferably 55% or more, and particularly preferably 57% or more. The upper limit thereof is not particularly limited, and it may be 100%. It may be, for example, 90% or less, or 80% or less.

In the present aspect, the positive electrode mixture has the diffraction peak A at $2\theta=20.2\pm0.5°$ and the diffraction peak B at $2\theta=41.1\pm0.8°$ in powder X-ray diffraction using CuKα ray. The diffraction peaks A and B are derived from crystals contained in the solid electrolyte.

In one embodiment, the positive electrode mixture may further have a diffractive peak at $2\theta=23.6\pm0.5°$.

In one embodiment, a half width of the diffraction peak B is 1.15° or less. As a result, the Li$^+$ conductivity of the solid electrolyte in the positive electrode mixture is further improved, and the rate characteristics are further improved.

The half width of the diffraction peak B is a value obtained by subtracting the apparatus constant, and specifically, it is calculated using the method described in Examples.

When a solid electrolyte (solid electrolyte having a narrow half width of the diffraction peak B) having good crystallinity is used as a raw material, and when it is mixed so as not to decrease the crystallinity as much as possible in the production of the positive electrode mixture, the half width of the diffraction peak B can be 1.15° or less. When the crystallinity of the solid electrolyte is excessively broken at the time of mixing, the half width of the diffraction peak B cannot be 1.15° or less even when recrystallization is attempted by subsequent heating.

The sulfur-based active material is not particularly limited, but examples thereof include sulfur, lithium sulfide (Li$_2$S), lithium polysulfide (Li$_2$S$_n$: n satisfies $1<n\leqq8$), titanium sulfide (TiS$_2$), molybdenum sulfide (MoS$_2$), iron sulfide (FeS, FeS$_2$), copper sulfide (CuS), nickel sulfide (Ni$_3$S$_2$), sulfur-containing polymer compound, and the like.

The sulfur is not particularly limited, but it is preferably high in purity. Specifically, the purity thereof is preferably 95% by mass or higher, more preferably 96% by mass or higher, and particularly preferably 97% by mass or higher.

Examples of the crystal system of the sulfur include α-sulfur (orthorhombic system), β-sulfur (monoclinic system), γ-sulfur (monoclinic system), amorphous sulfur, and the like. These may be used alone, or two or more thereof may be used in combination.

The solid electrolyte contains a thio-LISICON Region II type crystalline structure. As a result, the above-described diffraction peaks A and B are observed. Here, the "thio-LISICON Region II type crystalline structure" represents any of a Li$_{4-x}$Ge$_{1-x}$P$_x$S$_4$ thio-LISICON Region II type crystalline structure (see Kanno et al., Journal of The Electrochemical Sociey, 148 (7) A742-746 (2001))), a crystalline structure similar to that of Li$_{4-x}$Ge$_{1-x}$P$_x$S$_4$ thio-LISICON Region II type (see Solid State Ionics, 177 (2006), 2721-2725).

In addition, the solid electrolyte may contain the thio-LISICON Region II type crystalline structure, or may contain it as a main crystal. From the viewpoint of obtaining higher ionic conductivity, it is preferable to contain it as the main crystal. In present specification, the phrase "contain it as a main crystal" means that the amount of the target crystalline structure is 80% or more in the crystalline structures, and it is preferably 90% or more, and more preferably 95% or more.

In one embodiment, the solid electrolyte includes a lithium atom, a phosphorus atom, a sulfur atom, a bromine atom and an iodine atom. As a result, the ionic conductivity is further improved, and the rate characteristics are further improved.

In this embodiment, the blending proportion (molar proportion) of lithium atom, sulfur atom, phosphorus atom, bromine atom, and iodine atom is not particularly limited, and it is preferably 1.0 to 1.8:1.0 to 2.0:0.1 to 0.8:0.01 to 0.3:0.01 to 0.3, more preferably 1.1 to 1.7:1.2 to 1.8:0.2 to 0.6:0.02 to 0.25:0.02 to 0.25, and more preferably 1.2 to 1.6:1.3 to 1.7:0.25 to 0.5:0.03 to 0.2:0.03 to 0.2, and still more preferably is 1.35 to 1.45:1.4 to 1.7:0.3 to 0.45:0.04 to 0.18:0.04 to 0.18.

The conductive aid being the carbon material may be a material having electronic conductivity. The conductive aid preferably has a plurality of pores. It is particularly preferably a carbon material having pores. The carbon material is highly conductive and lighter than other conductive materials so that the power density per weight of the battery can be increased.

The specific surface area of the conductive aid is preferably 0.1 $m^2/g$ or more and 5,000 $m^2/g$ or less, more preferably 1 $m^2/g$ or more and 4,000 $m^2/g$ or less, still more preferably 1 $m^2/g$ or more and 3,000 $m^2/g$ or less, and most preferably 10 $m^2/g$ or more and 3,000 $m^2/g$ or less.

The pore volume of the conductive aid is preferably 0.1 cc/g or more and 5.0 cc/g or less.

The pores of the conductive aid preferably have an average diameter of 0.1 nm or more and 40 nm or less, more preferably 0.5 nm or more and 40 nm or less, still more preferably 0.5 nm or more and 20 nm or less, and most preferably 1 nm or more and 20 nm or less.

The specific surface area of the conductive aid, the pore volume thereof, and the pore diameter thereof can be obtained by using a nitrogen adsorption isotherm obtained by adsorbing nitrogen gas to the conductive aid at the liquid nitrogen temperature. Specifically, the specific surface area thereof can be calculated by Brenauer-Emmet-Telle (BET) multi-point method using the nitrogen adsorption isotherm. The pore volume thereof and the pore diameter thereof can be obtained by Barret-Joyner-Halenda (BJH) method using the nitrogen adsorption isotherm.

As the measuring device, for example, it can be measured using a specific surface area and pore distribution measuring device (Autosorb-3) manufactured by Quantacrome.

The carbon material is not limited, but examples thereof include carbon black such as Ketjen black, acetylene black, Denca black, thermal black and channel black, mesoporous carbon, activated carbon, amorphous carbon, carbon nanotubes, vapor grown carbon fiber (VGCF), carbon nanohorns, and the like, and further examples of the conductive carbon material include fullerene, carbon fiber, natural graphite, artificial graphite, graphene, graphene oxide, reduced graphene oxide, and the like. These may be used alone, or two or more of them may be used in combination. Also, a composite of them can be used.

A mesoporous carbon is a carbon material having pores in two dimensions or three dimensions obtained by the process described in the following documents: for example, S. J. Sang, S. H. Joo, R. Ryoo, et., J. Am. Chem. Soc., 122 (2000) 10712-10713, and T. Yokoi, Y. Sakamoto, O. Terasaki, et., J. Am. Chem. Soc., 128 (2006) 13664-13665.

In one embodiment, the positive electrode mixture may or may not include other component other than the sulfur-based active material, the solid electrolyte and the conductive aid.

The other component is not particularly limited, and examples thereof include a binder, a solvent, a dispersant, and the like.

The amounts of the sulfur-based active material, the solid electrolyte and the conductive aid is not particularly limited in the positive electrode mixture.

In one embodiment, the amount of the sulfur-based active material is 40 to 350 parts by mass based on 100 parts by mass of the solid electrolyte.

In one embodiment, the amount of the conductive aid is 10 to 300 parts by mass based on 100 parts by mass of the solid electrolyte.

In one embodiment, 50% by mass or more, 60% by mass or more, 70% by mass or more, 80% by mass or more, 90% by mass or more, 95% by mass or more, 99% by mass or more, 99.5% by mass or more, or substantially 100% by mass of the positive electrode mixture is the conductive aid, the sulfur-based active material and the solid electrolyte. When "substantially 100% by mass" thereof is formed of those materials, it may contain an inevitable impurity.

In one embodiment, the positive electrode mixture has a weight reduction rate of 2.5% or more, preferably 3.0% or more, and more preferably 3.5% or more when the heating treatment is conducted at 190°C for two hours.

In one embodiment, the positive electrode mixture has a weight reduction rate of the sulfur-based active material of 7.0% or more, preferably 9.0% or more, and more preferably 11.0% or more when the heating treatment is conducted at 190°C for two hours.

When the conductive aid which is the carbon material is sufficiently pulverized, the sulfur filled in the pores of the carbon is easily released by heating. As a result, the weight reduction rate (in particular, the weight reduction rate of the sulfur-based active material) in the case where the heating treatment is conducted at 190°C for two hours can occur. Accordingly, it can be said that the higher the weight reduction rate (in particular, the weight reduction rate of the sulfur-based active material), the higher the dispersibility of each component in the positive electrode mixture. As a result, the positive electrode mixture can exhibit excellent rate characteristics.

The weight reduction rate and the weight reduction rate of the sulfur-based active material described above are values measured by the method described in the Examples.

2. Method for producing positive electrode mixture

A method for producing a positive electrode mixture according to an aspect of the present invention includes: adding a solid electrolyte to a sulfur-based active material and first-mixing them to obtain a first mixture, and adding a further solid electrolyte to the first mixture and second-mixing them to obtain a second mixture, wherein the second-mixing treatment is conducted with an energy smaller than that of the first-mixing treatment.

According to the method for producing a positive electrode mixture according to the present aspect, a positive electrode mixture capable of exhibiting excellent rate characteristics can be obtained.

That is, when the sulfur-based active material and the solid electrolyte can be sufficiently mixed in first-mixing, and when the second-mixing treatment is conducted with an energy smaller than that of the first-mixing treatment, the crystallinity of the solid electrolyte can be suitably maintained. As a result, both of good mixing state and crystallinity can be achieved to improve the rate characteristics.

In the present aspect, the description given for the positive electrode mixture described above can be used for the conductive aid and the sulfur-based active material.

The solid electrolyte added in first-mixing and the solid electrolyte added in second-mixing may be the same as or different from each other. The solid electrolyte added in first-mixing may be used alone, or two or more thereof may be used in combination. Further, the solid electrolyte added in second-mixing may be used alone, or two or more thereof may be used in combination.

The solid electrolyte used in first-mixing is not particularly limited, and examples thereof include the sulfide solid electrolyte.

The sulfide solid electrolyte is a solid electrolyte including at least sulfur atom and exhibiting ionic conductivity due to contained metallic atoms, and a solid electrolyte including sulfur atom and preferably lithium atom and phosphorus atom, more preferably lithium atom, phosphorus atom and halogen atom, and having ionic conductivity due to lithium atom.

In one embodiment, the solid electrolyte includes a lithium atom, a phosphorus atom, a sulfur atom, a bromine atom and an iodine atom.

The sulfide solid electrolyte may be an amorphous sulfide solid electrolyte, or may be a crystalline sulfide solid electrolyte.

(Amorphous sulfide solid electrolyte)

The amorphous sulfide solid electrolyte contains at least sulfur atom and can be employed without any particular limitation as long as it exhibits ionic conductivity caused by the contained metal atom, and typical examples thereof preferably include a solid electrolyte such as $Li_2S$-$P_2S_5$ composed of lithium sulfide and phosphorus sulfide and containing sulfur atom, lithium atom and phosphorus atom; a solid electrolyte such as $Li_2S$-$P_2S_5$-LiI, $Li_2S$-$P_2S_5$-LiCl, $Li_2S$-$P_2S_5$-LiBr and $Li_2S$-$P_2S_5$-LiI-LiBr composed of lithium sulfide, phosphorus sulfide, and lithium halide; and a solid electrolyte containing other elements such as oxygen element and silicon element, for example, such as $Li_2S$-$P_2S_5$-$Li_2O$-LiI and $Li_2S$-$SiS_2$-$P_2S_5$-LiI. From the viewpoint of obtaining higher ionic conductivity, the solid electrolyte such as $Li_2S$-$P_2S_5$-LiI, $Li_2S$-$P_2S_5$-LiCl, $Li_2S$-$P_2S_5$-LiBr, $Li_2S$-$P_2S_5$-LiI-LiBr composed of lithium sulfide, phosphorus sulfide, and lithium halide, is preferable.

The kind of the element constituting the amorphous sulfide solid electrolyte can be confirmed by, for example, an ICP emission spectrometer.

When the amorphous sulfide solid electrolyte has at least a $Li_2S$-$P_2S_5$, the molar ratio of $Li_2S$ to $P_2S_5$ is preferably 30 to 85:15 to 70, more preferably 40 to 80:20 to 60, and still more preferably 45 to 78:22 to 55, from the viewpoint of obtaining higher ionic conductivity with high chemical stability.

When the amorphous sulfide solid electrolyte is, for example, $Li_2S$-$P_2S_5$-LiI-LiBr, the total amount of lithium sulfide and phosphorus pentasulfide is preferably 30 to 95 mol%, more preferably 35 to 90 mol%, and still more preferably 40 to 85 mol%. The amount of lithium bromide based on the total amount of lithium bromide and lithium iodide is preferably from 1 to 99 mol%, more preferably from 20 to 90 mol%, still more preferably from 40 to 80 mol%, and particularly preferably from 50 to 70 mol%.

The form of the amorphous sulfide solid electrolyte is not particularly limited, and examples thereof include particulate forms. The average particle size ($D_{50}$) of the particulate amorphous sulfide solid electrolyte may be, for example, in the range of 0.01 $\mu$m to 500 $\mu$m and 0.1 to 200 $\mu$m.

In the present specification, the average particle diameter ($D_{50}$) is a particle diameter that reaches 50% of the total by sequential integration of the particles having the smallest particle diameter when the particle diameter distribution

6

integration curve is drawn, and the volume distribution is an average particle diameter that can be measured using, for example, a laser diffraction/scattering particle diameter distribution measuring device.

(Crystalline sulfide solid electrolyte)

The crystalline sulfide solid electrolyte may be, for example, a so-called glass ceramic obtained by heating the amorphous sulfide solid electrolyte above to a crystallization temperature or higher, and a sulfide solid electrolyte having the following crystal structure may be used.

Examples of the crystalline structure that can be possessed by the crystalline sulfide solid electrolyte containing lithium atom, sulfur atom, and phosphorus atom include a $Li_3PS_4$ crystalline structure, a $Li_4P_2S_6$ crystalline structure, a $Li_7PS_6$ crystalline structure, a $Li_7P_3S_{11}$ crystalline structure, and a crystalline structure having peaks in the vicinity of $2\theta=20.2°$ and in the vicinity of $23.6°$ (for example, JP 2013-16423 A).

Examples of the crystalline structure that can be possessed by the crystalline sulfide solid electrolyte including lithium atom, sulfur atom, phosphorus atom and the halogen atom include a $Li_{4-x}Ge_{1-x}P_xS_4$ thio-LISICON Region II type crystalline structure, a crystalline structure similar to that of $Li_{4-x}Ge_{1-x}P_xS_4$ thio-LISICON Region II type described above, and the like.

In X-ray diffraction measurement using CuKα rays, diffraction peaks of $Li_3PS_4$ crystalline structure appear, for example, around $2\theta=17.5°$, $18.3°$, $26.1°$, $27.3°$, and $30.0°$, diffraction peaks of $Li_4P_2S_6$ crystalline structure appear, for example, around $2\theta=16.9°$, $27.1°$, and $32.5°$, diffraction peaks of $Li_7PS_6$ crystalline structure appear, for example, around $2\theta=15.3°$, $25.2°$, $29.6°$, and $31.0°$, diffraction peaks of $Li_7P_3S_{11}$ crystalline structure appear, for example, around $2\theta=17.8°$, $18.5°$, $19.7°$, $21.8°$, $23.7°$, $25.9°$, $29.6°$, and $30.0°$, diffraction peaks of $Li_{4-x}Ge_{1-x}P_xS_4$ system thio-LISICON Region II type crystalline structure appear, for example, around $2\theta=20.1°$, $23.9°$, and $29.5°$, and diffraction peaks of the crystalline structure similar to $Li_{4-x}Ge_{1-x}P_xS_4$ system thio-LISICON Region II type crystalline structure appear, for example, around $2\theta=20.2°$ and $23.6°$. The peak position may be about $\pm0.5°$.

In addition, the crystalline structure of the crystalline sulfide solid electrolyte may be argyrodite-type crystal structure. Examples of argyrodite-type crystal structure include a $Li_7PS_6$ crystal structure; a crystal structure represented by the formula $Li_{7-x}P_{1-y}Si_yS_6$ or $Li_{7+x}P_{1-y}Si_yS_6$ (x is -0.6 to 0.6, y is 0.1 to 0.6) having a $Li_7PS_6$ structure skeleton; a crystal structure having $Li_{7-x-2y}PS_{6-x-y}Cl_x$ ($0.8\leqq x\leqq 1.7$, $0<y\leqq -0.25x+0.5$); and a crystal structure having $Li_{7-x}PS_{6-x}Ha_x$ (Ha is Cl or Br, and x is preferably 0.2 to 1.8).

Among the above crystal structures, the crystal structure of the crystalline sulfide solid electrolyte is preferably a $Li_3PS_4$ crystal structure, a thio-LISICON region II type crystal structure, and an argyrodite-type crystal structure.

The form of the crystalline sulfide solid electrolyte is not particularly limited, and examples thereof include particulate forms. The average particle size ($D_{50}$) of the particulate crystalline sulfide solid electrolyte may be, for example, in the range of 0.01 μm to 500 μm, or 0.1 to 200 μm, similar to the average particle size ($D_{50}$) of the amorphous sulfide solid electrolyte described above.

The mixing amount of the solid electrolyte used in first-mixing is preferably 1 to 80%, and more preferably 5 to 75% of the total mass amount of the solid electrolyte added in first-mixing and second-mixing.

The solid electrolyte used in second-mixing contains the thio-LISICON Region II type crystalline structure, as described above.

The mixing amount of the solid electrolyte used in second-mixing is preferably 20 to 99%, and more preferably 25 to 95% of the total mass amount of the solid electrolyte added in first-mixing and second-mixing.

The ratio of the total mass amount of the solid electrolyte added in first-mixing and second-mixing to the total mass amount of the sulfur-based active material and the conductive aid (solid electrolyte: sulfur-based active material + conductive aid) is 10:90 to 90:10, preferably 15 to 70:85 to 30, and more preferably 20 to 60:80 to 40.

In one embodiment, when the crystalline solid electrolyte is used in first-mixing, they are mixed in first-mixing under the condition where amorphization of the solid electrolyte added in first-mixing is proceeded, and they are mixed in second-mixing under the condition where the crystallinity of the solid electrolyte added in second-mixing does not disappear. As a result, the rate characteristics can be further improved.

The progress of the amorphization can be determined by broadening the peak derived from the crystalline component in the X-ray diffraction measurement.

The energy of each mixing treatment in first-mixing and second-mixing is not particularly limited as long as the condition "energy of first-mixing > energy of second-mixing" is satisfied. For example, the mixing treatment can be conducted in first-mixing under a condition in which the intensity of the crystalline peak of the solid electrolyte added in first-mixing is decreased, the half width of the peak thereof is increased, or the peak thereof disappears. On the other hand, the mixing treatment can be conducted in second-mixing under a condition in which the crystalline peak of the solid electrolyte added in second-mixing does not disappear, preferably under a condition in which the change of the intensity of the crystalline peak or the change of the peak half width is small. Here, the phrase "change thereof is small" may mean, for example, that the rate of change is smaller than the rate of change in first-mixing.

Examples of the mixing apparatus used in first-mixing include, for example, a planetary ball mill, a rolling mill, a bead mill, a FILMIX, a Nauta mixer, a tornado mixer, a twin screw extruder, a multiaxial-spindle roller, a solid-phase-state shear kneader, and the like.

As the mixing apparatus used in second-mixing, those described in first-mixing can be used. Provided that when the mixing apparatus is selected or when the operating conditions are set, the energy of the mixing treatment is used to satisfy the condition "that of first-mixing > that of second-mixing". The apparatus used in first-mixing and second-mixing may be the same as or different from each other. When the same apparatus is used therein, for example, a method in which the treatment time and the integrated power is set to satisfy the condition "that of first-mixing > that of second-mixing", a method in which the rotational speed is set to satisfy the condition "that of first-mixing > that of second-mixing" in the case where the rotational power such as a planetary ball mill or a rolling mill is used, or the like can be used.

In one embodiment, a planetary ball mill is used in first-mixing.

In one embodiment, a rolling mill is used in second-mixing.

In one embodiment, the sulfur-based active material to be subjected to first-mixing is previously combined with the conductive aid.

For example, when the sulfur-based active material is heated with the conductive aid prior to first-mixing, the sulfur-based active material can be combined with the conductive aid. The heating temperature is not particularly limited, and for example, it exceeds 120°C. It may be, for example, 150°C or higher, 170°C or higher, 200°C or higher, 150°C or higher, 200°C or higher, 250°C or higher, or 300°C or higher. The upper limit is, for example, 350°C or lower.

The mass ratio of the sulfur-based active material to the conductive aid (sulfur-based active material: conductive aid) is 10:90 to 95:5, and preferably 20 to 80:90 to 10.

In one embodiment, the positive electrode mixture produced by the method for producing a positive electrode mixture according to the present aspect is the positive electrode mixture according to an aspect of the present invention described above.

3. Lithium-ion battery

The lithium-ion battery according to an aspect of the present invention includes the positive electrode mixture according to an aspect of the present invention described above.

According to the lithium-ion battery of the present aspect, excellent rate characteristics can be achieved.

The positive electrode mixture can be used as a positive electrode layer of the lithium-ion battery. In this case, a known configuration can be used as other configuration of the lithium-ion battery in the present technical field, and a negative electrode layer in which the negative electrode active material does not contain lithium-ion can be used.

The negative electrode active material included in the negative electrode layer of the lithium-ion battery may be "a negative electrode active material containing lithium-ion". In addition, the negative electrode active material included in the negative electrode layer of the lithium-ion battery may be "a negative electrode active material that supplies lithium-ion to a positive electrode".

The negative electrode of the lithium-ion battery is not particularly limited as long as it can be used in ordinary battery. The negative electrode may be formed of a negative electrode mixture obtained by mixing the negative electrode active material and the solid electrolyte.

As the negative electrode active material, commercially available ones can be used. For example, carbon material, Sn metal, In metal, Si metal, alloys of these metals, and the like can be used. Specific examples thereof include natural graphite, various types of graphite, a metal powder such as and Si, Sn, Al, Sb, Zn and Bi, a metal alloy such as SiAl, $Sn_5Cu_6$, $Sn_2Co$ and $Sn_2Fe$, others such as an amorphous alloy and a plated alloy. Although there is no particular limitation on the particle size, those having an average particle size of several $\mu m$ to 80 $\mu m$ can be suitably used.

The electrolyte layer is not particularly limited, and a known electrolyte layer can be used. For example, an oxide-based solid electrolyte, a sulfide-based solid electrolyte, and a polymer electrolyte is preferable, and a sulfide-based solid electrolyte is more preferable from the viewpoint of ionic conductivity. The sulfide-based solid electrolyte is preferably used for the positive electrode mixture described above.

The method for producing the lithium-ion battery is not particularly limited. For example, a method in which a solid electrolyte layer is formed on a sheet in which the positive electrode layer made of the positive electrode mixture according to an aspect of the present invention is formed on a positive electrode current collector, a sheet having the negative electrode layer formed on a negative electrode current collector in advance is stacked thereon, and then they are pressed, and the like can be given.

Examples

Examples of the present invention are described below, but the present invention is not limited by these Examples.

(Example 1)

1. Preparation of positive electrode mixture

(1) Preparation of composite powder A

An activated carbon (manufactured by Kansai Coke and Chemicals Company, Limited, MSC-30) and sulfur were added to a glass bottle at a mass ratio of 3:7, and it was added and sealed in a SUS tube container. It was heated in an electric furnace at 150°C for 6 hours, and then 300°C for 2.75 hours to obtain composite powder A of the activated carbon and sulfur.

(2) Preparation of solid electrolyte A

0.4127 g of lithium sulfide, 0.6655 g of phosphorus pentasulfide, 0.2137 g of lithium iodide, 0.2080 g of lithium bromide, and ten zirconia balls having the diameter 10 mm were added to a 45 mL of zirconia pot, and it was sealed. Mixing treatment (mechanical milling) was conducted for 40 hours at a rotational speed of 370 rpm by using a planetary ball mill apparatus (manufactured by Fritsch GmbH, model number P-7) to obtained a powder. The obtained powder was heated at 195°C for three hours to obtain a solid electrolyte A.

(3) Preparation of positive electrode mixture powder

First-mixing

0.9 g of the composite powder A and 0.18 g of the solid electrolyte A, together with ten zirconia balls having the diameter of 10 mm, were added to a 45 mL of zirconia pot, and it was sealed. Mixing treatment was conducted at room temperature for 20 hours at a rotational speed of 370 rpm by using a planetary ball mill (manufactured by Fritsch GmbH, model number P-7) to obtain composite powder B.

Second-mixing

0.54 g of the composite powder B and 0.36 g of the solid electrolyte A, together with 34 g of zirconia ball having the diameter of 2 mm, were added to a 45 mL of zirconia pot, and it was sealed. They were mixed at a rotational speed of 600 rpm for an hour at room temperature using a rolling mill ("small ball mill frame", manufactured by Asahi Rika Seisakusho, model number: AV-1) to obtain a positive electrode mixture powder.

2. Measurement method and experiment method

(1) Energy dispersive X-Ray spectroscopy (SEM-EDS analysis) of electron microscope image and calculation of overlap rate of carbon and phosphorus

Preparation of positive electrode mixture pellet

100 mg of the solid electrolyte A was pressure molded in a Macor cylinder having the diameter of 10 mm. 20 mg of the obtained positive electrode mixture powder was added on the pressure surface thereof, and it was molded with pressure again. Subsequently, 20 mg of the positive electrode mixture powder was added on the pressure surface of the opposite side thereof, it was pressurized again, and then a molded body was extracted from the cylinder to obtain a positive electrode mixture pellet.

SEM-EDS analysis

The positive electrode mixture pellet was vertically divided, and then the exposed surface thereof was subjected to an ion milling treatment (manufactured by Hitachi High-Tech Corporation, IM4000) to form a cross-section of the positive electrode mixture pellet. The SEM-EDS elemental mapping measurement was conducted on the obtained cross-section using SEM (manufactured by Hitachi High-Tech Corporation, SU8220) and EDS (manufactured by Bruker, QUANTAX FlatQUAD) to obtain ten fields of view for a secondary electron image and an EDS image of carbon and phosphorus. It was conducted using the observation magnification of 5,000 times, the acceleration voltage of 10 kV, and the scanning area of $1024 \times 768$. EDS mapping was not conducted with any specific image treatment, and it was conducted using the image in which the actual measured intensities were mapped.

When SEM-EDS elemental mapping measurement was conducted, a region subjected to cross-sectional processing was divided into two equal portions in the upper and lower using ion milling, and each of the two equally divided regions was divided into five equal portions in the left and right. Each central portion of the ten divided regions obtained in this manner was observed at the observation magnification of 5,000 times to obtain SEM-EDS element mapping.

Calculation of overlap rate of carbon and phosphorus

OpenCV (4.5.1) of Python (3.9.9) was used for the image treatment obtained in the above manner. A smoothing treatment was conducted twice on all ten fields of view of EDS image of carbon and phosphorus using a bilateral filter with d=15 and sigmaColor=64 and sigmaSpace=64. Pixels in the obtained images were compressed to 1/3 by using MaxPooling 2D (pool_size=3, strides=3) of the neural network open library Keras (2.4.3), and they were smoothed using a median filter. The smoothed image was subjected to the gray scale, and a binarizing treatment was conducted with a minimum luminance of 30 and a maximum luminance of 255 for carbon, and a minimum luminance of 40 and a maximum luminance of 255 for phosphorus.

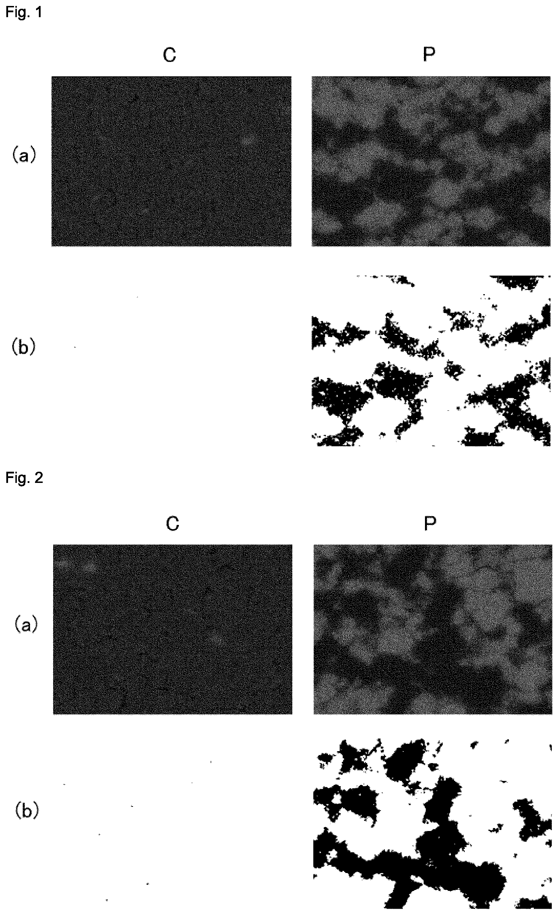

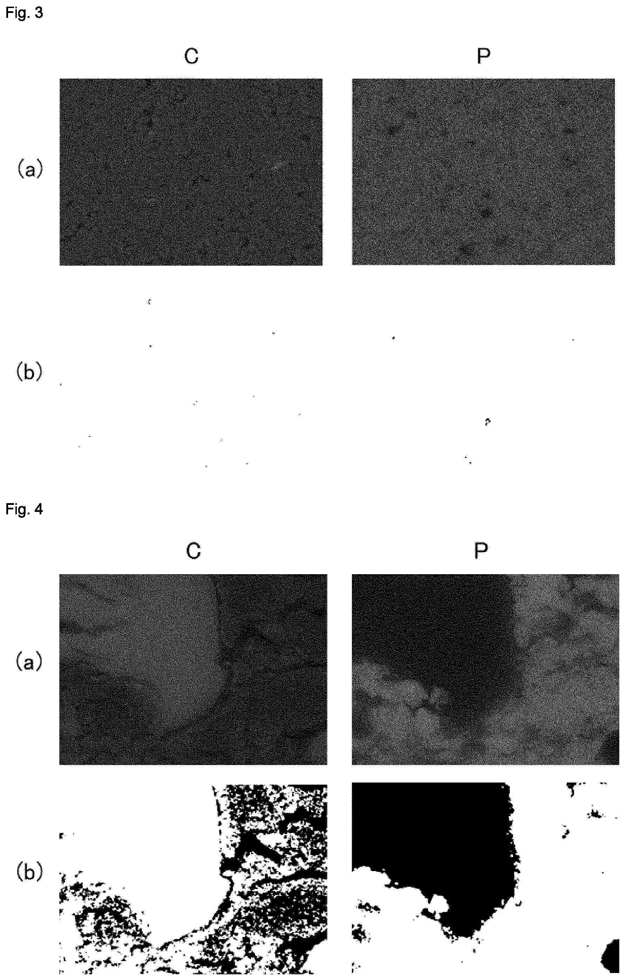

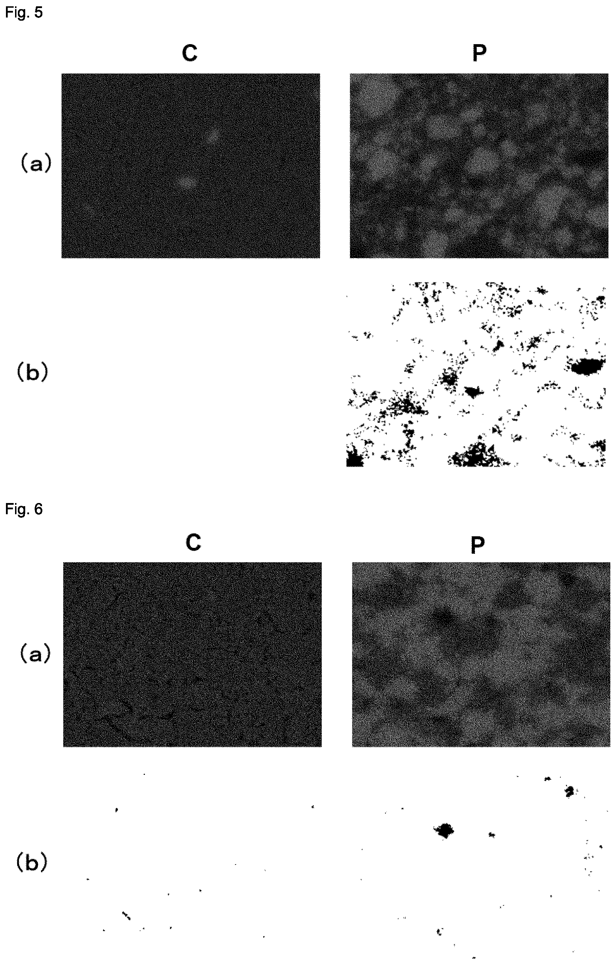

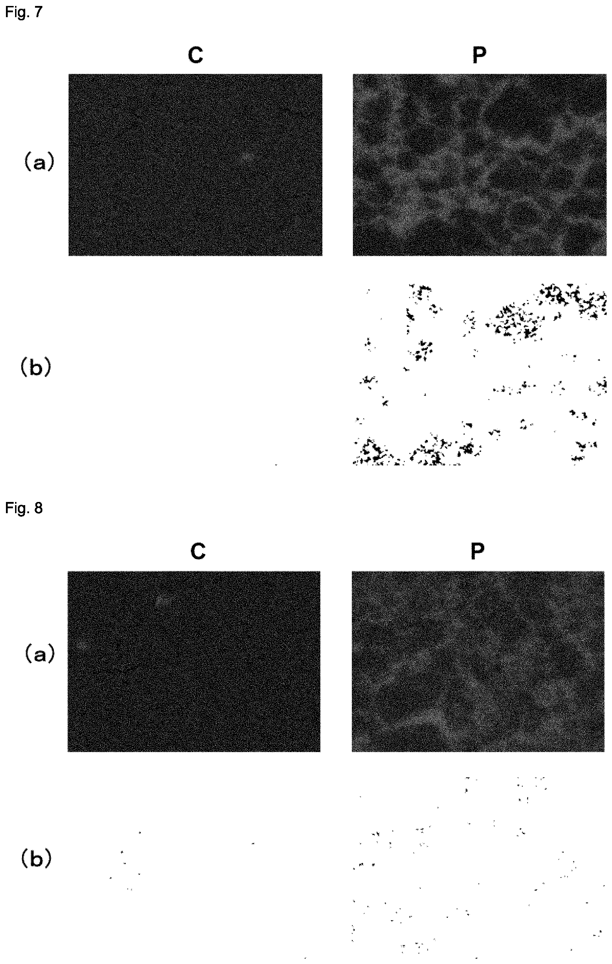

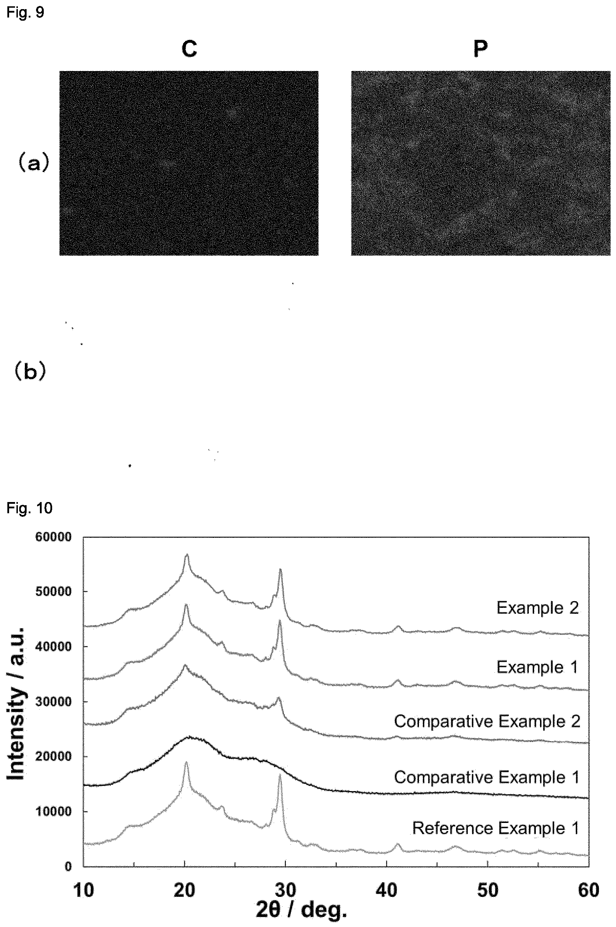

Fig. 1 shows the results of SEM-EDS analysis including the above-described image treatment. Further, Fig. 2 shows the results of Example 2 described later, Fig. 3 shows the results of Comparative Example 1, Fig. 4 shows the results of Comparative Example 2, Fig. 5 shows the results of Example 3, Fig. 6 shows the results of Example 4, Fig. 7 shows the results of Example 5, Fig. 8 shows the results of Example 6, and Fig. 9 shows the results of Example 7. In Fig. 1 to Fig. 9, (a) thereof shows the result before image treatment (before smoothing, compressing, and binarizing treatment), and (b) thereof shows the result after image treatment. In addition, the symbol "C" represents a mapping of carbon, and the symbol "P" represents a mapping of phosphorus.

Through these processes, when the element was not present, the image data was converted into a numeric matrix of 0, and when the element was present, it was converted into a numeric matrix of 255. In the numerical matrix of carbon and phosphorus, the total number of pixels in which the numeric matrix 255 was overlapped at the same coordinates was divided by the total number of pixels to calculate an overlap rate per a field of view. The average of the overlap rates of all ten fields of view was used as the overlap rate of the present aspect.

(2) Powder X-ray diffraction (XRD) of positive electrode mixture powder

The obtained positive electrode mixture powder was subjected to XRD measurement.

Specifically, the positive electrode mixture powder was filled into a trench having the diameter of 20 mm and the depth of 0.2 mm, and then it was leveled by glass to obtain a sample. This sample was sealed with a Kapton film for XRD, and it was measured without exposing to the air.

The XRD measurement was conducted using a powder X-ray diffractometer D2 PHASER manufactured by Bruker under the following conditions.

[Measurement conditions]

Tube voltage: 30 kV
Tube current: 10 mA
X-ray wavelength: Cu-K$\alpha$ ray (1.5418 Å)
Optical system: focusing method
Slit configuration: solar slit 4° (on both incident and receiving sides), divergent slit 1 mm, K$\beta$ filter (0.5% Ni plate), with air scatter screen 3 mm
Detector: semiconductor detector
Measurement range: $2\theta$=10 to 60 deg
Step width, scan speed: 0.05 deg, 0.05 deg/sec

The XRD measurement was also conducted on a reference sample (Reference Example 1) obtained by measuring 0.45 g of the composite powder A and 0.45 g of the solid electrolyte A, adding them to an agate mortar, and mixing them in a mortar for 10 minutes.

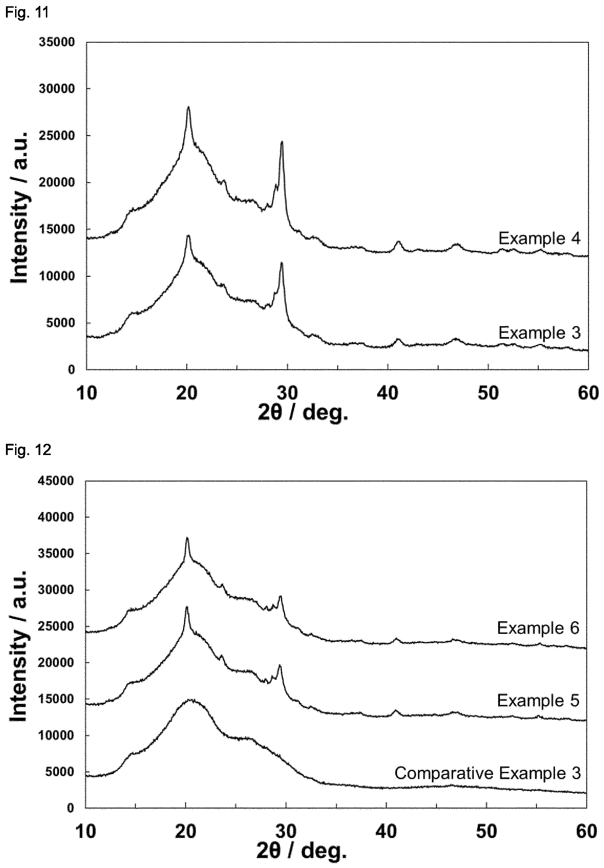

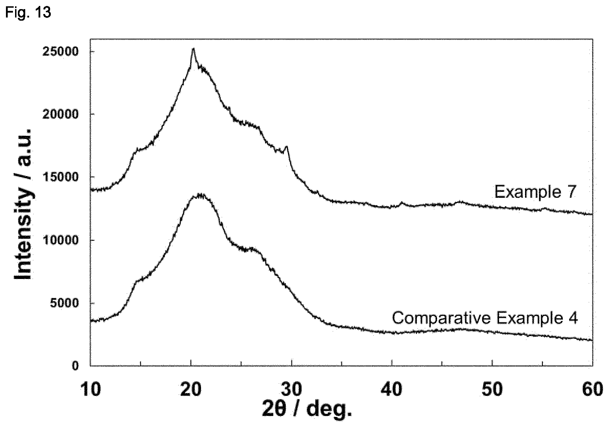

The results are shown in Fig. 10. The results of Example 3 and Example 4 described later are shown in Fig. 11, the results of Example 5, Example 6 and Comparative Example 3 are shown in Fig. 12, and the results of Example 7 and Comparative Example 4 are shown in Fig. 13.

The presence or absence of each of the diffraction peak A at $2\theta$=20.2±0.5° and the diffraction peak B at $2\theta$=41.1

±0.8° was confirmed based on these results. Further, the half width of the diffraction peak B was obtained by the following method.

Calculation of half width of diffraction peak B

The apparatus constant (β) which was inherent in the measuring apparatus was subtracted from the half width (w) obtained by the measurement to calculate the peak half width (β) of the positive electrode mixture as β=w-B.

w: half width of the peak (diffraction peak B) at 41.1°±0.8° obtained by measurement
B: the apparatus constant (standard substance (silicon) was measured in the same manner, and
B=0.1269° was obtained from the peak of 2θ=28.4°)

The value w (the half width obtained by measurement) was obtained as follows. A baseline using a straight line for the peak-shape obtained by XRD measurement was set, and the difference between the intensity and the baseline at each point was obtained to form the XRD curve. The XRD curve was used as the formula (f(x)=(1-α)×L(x)+α×G(x)) composed of Lorentz function L(x) and Gaussian function G(x) to determine parameter A (corrected peak intensity), w, $x_0$ (2θ of peak top) and α (proportion of Lorentz function) by curve fitting.

$$L(x) = A \frac{w^2}{4(x-x_0)^2 + w^2}$$

$$G(x) = A \exp\left[ -4 \ln 2 \frac{(x-x_0)^2}{w^2} \right]$$

In the curve fitting, a range of about ±1.0° from the peak top was suitably set as the fitting range. The error between the intensity of the fitting curve calculated by f(x) at θ and the intensity of XRD curve were obtained, and the total amount of the errors across the fitting range was minimized to conduct Fitting. The solver function (GRG nonlinear) of spreadsheet software (Excel, Microsoft) was used here.

(3) Measurement experiment of weight reduction rate in heating treatment

The obtained positive electrode mixture powder was subjected to the following measurement.
First, an aluminum foil petri dish (manufactured by Tokyo Garasu Kikai Co., Ltd., Volume 12 mL) was weighed. 0.2000 g (error ± 0.0005 g or less) of the positive electrode mixture powder was weighed and then it was added to the weighed petri dish, and the powder was leveled to evenly distribute it as much as possible on the bottom surface of the petri dish. The aluminum foil petri dish was placed on a hot plate (manufactured by AS ONE Corporation, ND-1A), it was doubly covered with two types of stainless petri dish (φ 50 mm × height 15 mm, and φ 60 mm × height 20 mm), and then the heating treatment in which the temperature thereof was increased to 190°C, and then the temperature thereof was maintained for two hours was conducted on it.
It was slowly cooled after the heating treatment, and then the aluminum foil petri dish on which the powder was placed was weighed. The total weight of the powder and the aluminum foil petri dish at this time was subtracted from the total weight thereof measured before the heating to calculate the weight reduction amount (ΔW) caused in the powder during the heating treatment. ΔW described above was divided by the weight of the powder before the heating treatment, and then it was converted to a percentage to calculate the weight reduction rate. Further, ΔW described above was divided by the weight of the sulfur-based active material before the heating treatment obtained by multiplying the weight of the powder before the heating treatment by the weight fraction of the sulfur-based active material, and then it was converted to a percentage to calculate the weight reduction rate of the sulfur-based active material.

(4) Evaluation of battery properties

Production of lithium-ion battery (all-solid-state)

100 mg of the solid electrolyte A prepared using the above-described manner was pressure molded in a Macor cylinder having the diameter of 10 mm. The positive electrode mixture powder prepared above was added to be 1.75 mg of the sulfur amount on the pressure surface thereof, and it was molded with pressure again. An indium foil and a lithium foil were added on the pressure surface opposite to the positive electrode mixture, and it was pressurized to produce an all-solid-state battery.

A constant current charge and discharge test was conducted on the obtained all-solid-state battery. The voltage range of the constant current charge and discharge test was set to 0.8 to 2.2 V, and the current value was set as shown in Table 1 below. The value at the seventh cycle was measured under the conditions described below as the discharge capacity (per sulfur mass) at 1 C.

Table 1

| Cycle [-] | Current value [mA] | |
| --- | --- | --- |
| | Discharge | Charge |
| **1,2** | 0.147 | 0.147 |
| **3** | 0.147 | 0.293 |
| **4** | 0.293 | 0.293 |
| **5** | 0.586 | 0.293 |
| **6** | 1.47 | 0.293 |
| **7** | 2.93 | 0.293 |
| **8** | 5.86 | 0.293 |

(Example 2)

First-mixing

0.9 g of the composite powder A obtained in the same manner as in Example 1 and 0.09 g of the solid electrolyte A obtained in the same manner as in Example 1, together with ten zirconia balls having the diameter of 10 mm, were added to a 45 mL of zirconia pot, and it was sealed. Mixing treatment was conducted at room temperature for 20 hours at a rotational speed of 370 rpm by using a planetary ball mill (manufactured by Fritsch GmbH, model number P-7) to obtain composite powder C.

Second-mixing

0.495 g of the composite powder C and 0.405 g of the solid electrolyte A, together with 34 g of zirconia ball having the diameter of 2 mm, were added to a 45 mL of zirconia pot, and it was sealed. They were mixed at a rotational speed of 600 rpm for an hour at room temperature using a rolling mill ("small ball mill frame", manufactured by Asahi Rika Seisakusho, model number: AV-1) to obtain a positive electrode mixture powder. The obtained positive electrode mixture powder was subjected to the same measurement and experiment as in Example 1.

(Comparative Example 1)

0.45 g of the composite powder A obtained in the same manner as in Example 1 and 0.45 g of the solid electrolyte A obtained in the same manner as in Example 1, together with ten zirconia balls having the diameter of 10 mm, were added to a 45 mL of zirconia pot, and it was sealed. Mixing treatment was conducted at room temperature for 20 hours at a rotational speed of 370 rpm by using a planetary ball mill apparatus (manufactured by Fritsch GmbH, model number P-7) to obtain a positive electrode mixture powder. The obtained positive electrode mixture powder was subjected to the same measurement and experiment as in Example 1.

(Comparative Example 2)

0.45 g of the composite powder A obtained in the same manner as in Example 1 and 0.45 g of the solid electrolyte A obtained in the same manner as in Example 1, together with 34 g of zirconia ball having the diameter of 2 mm, were added to a 45 mL of zirconia pot, and it was sealed. They were mixed at a rotational speed of 600 rpm for 20 hours at room temperature using a rolling mill ("small ball mill frame", manufactured by Asahi Rika Seisakusho, model number: AV-1) to obtain a positive electrode mixture powder. The obtained positive electrode mixture powder was subjected to the same measurement and experiment as in Example 1.

(Example 3)

First-mixing

The composite powder B was obtained in the same manner as in Example 1.

Second-mixing

0.54 g of the composite powder B and 0.36 g of the solid electrolyte A, together with 34 g of zirconia ball having the diameter of 2 mm, were added to a 45 mL of zirconia pot, and it was sealed. They were mixed at a rotational speed of 600 rpm for 20 hours at room temperature using a rolling mill ("small ball mill frame", manufactured by Asahi Rika Seisakusho, model number: AV-1) to obtain a positive electrode mixture powder. The obtained positive electrode mixture powder was subjected to the same measurement and experiment as in Example 1.

(Example 4)

(1) Preparation of solid electrolyte B

0.2058 g of lithium sulfide, 0.9942 g of phosphorus pentasulfide, and ten zirconia balls having the diameter 10 mm were added to a 45 mL of zirconia pot, and it was sealed. Mixing treatment (mechanical milling) was conducted for 20 hours at a rotational speed of 370 rpm by using a planetary ball mill apparatus (manufactured by Fritsch GmbH, model number P-7) to obtained a powder.

(2) Preparation of positive electrode mixture powder

First-mixing

0.9 g of the composite powder A and 0.18 g of the solid electrolyte B, together with ten zirconia balls having the diameter of 10 mm, were added to a 45 mL of zirconia pot, and it was sealed. Mixing treatment was conducted at room temperature for 20 hours at a rotational speed of 370 rpm by using a planetary ball mill (manufactured by Fritsch GmbH, model number P-7) to obtain composite powder D.

Second-mixing

0.54 g of the composite powder D and 0.36 g of the solid electrolyte A, together with 34 g of zirconia ball having the diameter of 2 mm, were added to a 45 mL of zirconia pot, and it was sealed. They were mixed at a rotational speed of 600 rpm for an hour at room temperature using a rolling mill ("small ball mill frame", manufactured by Asahi Rika Seisakusho, model number: AV-1) to obtain a positive electrode mixture powder. The obtained positive electrode mixture powder was subjected to the same measurement and experiment as in Example 1.

The above results are shown in Table 2. The battery properties, that is, the capacity obtained at each charge and discharge rate, are influenced by the mass of the used active material (sulfur-based active material in the present technology), and therefore it is appropriate to compare them under conditions where the mass of the active materials is uniform. The mass of the active materials is uniform in Examples 1 to 4 and Comparative Examples 1 and 2 shown in Table 2. Similarly, the mass of the active materials is also uniform in Examples 5 and 6 and Comparative Example 3 shown in Table 4 described later. The mass of the active materials is also uniform in Example 7 and Comparative Example 4 shown in Table 6 described later.

Table 2

| | Overlap rate of carbon and phosphorus | Diffraction peak A | Diffraction peak B | Half width of diffraction peak B [° ] | Weight reduction rate [9%] | Weight reduction rate of sulfur-based active material [%] | Discharge capacity @1 C [mAh/g$_s$] |
|---|---|---|---|---|---|---|---|
| **Example 1** | **65.4%** | **Present** | **Present** | **0.60** | **3.99** | **11.4** | **963** |

(continued)

| | Overlap rate of carbon and phosphorus | Diffraction peak A | Diffraction peak B | Half width of diffraction peak B [°] | Weight reduction rate [9%] | Weight reduction rate of sulfur-based active material [%] | Discharge capacity @1 C [mAh/g$_s$] |
|---|---|---|---|---|---|---|---|
| Example 2 | 62.5% | Present | Present | 0.58 | 4.55 | 13.0 | 765 |
| Comparative Example 1 | 99.8% | Absent | Absent | - | 4.70 | 13.4 | 637 |
| Comparative Example 2 | 44.8% | Present | Present | 0.72 | 2.10 | 6.00 | 169 |
| Example 3 | 89.2% | Present | Present | 0.68 | 4.76 | 13.6 | 730 |
| Example 4 | 97.4% | Present | Present | 0.62 | 9.25 | 26.4 | 844 |

(Example 5)

1.Preparation of positive electrode mixture

(1) Preparation of solid electrolyte C

15.3 g of lithium sulfide and 24.7 g of phosphorus pentasulfide were added to a 1 L of reaction vessel equipped with a stirring blade under a nitrogen atmosphere, the stirring blade was operated, and then 400 mL of tetrahydrofuran cooled to -20°C was added to the vessel. The temperature thereof was naturally increased to room temperature, and then the stirring was continued for 72 hours. The obtained reaction solution slurry was subjected to a glass filter (pore size: 40 to 100 $\mu$m) to obtain a solid content, and then the solid content was dried at 90°C to obtain a Li$_3$PS$_4$ powder (purity: 90% by mass). 1.70 g of the obtained Li$_3$PS$_4$ powder, 0.19 g of lithium bromide, and 0.28 g of lithium iodide were added to a Schlenk bottle (volume: 100 mL) with a stirrer bar under a nitrogen atmosphere. The stirrer bar was rotated, and then 20 mL of tetramethylethylenediamine (TMEDA) being a complexing agent was added thereto. The stirring was continued for 12 hours to obtain an electrolyte precursor-containing material, and then it was dried at room temperature in a vacuum to obtain a powder of electrolyte precursor. The resulting electrolyte precursor was heated in a vacuum at 120°C for two hours, and it was further heated in a vacuum at 140°C for two hours to obtain solid electrolyte C.

(2) Preparation of positive electrode mixture powder

First-mixing

0.80 g of the composite powder A and 0.20 g of the solid electrolyte A, together with ten zirconia balls having the diameter of 10 mm, were added to a 45 mL of zirconia pot, and it was sealed. Mixing treatment was conducted at room temperature for 20 hours at a rotational speed of 370 rpm by using a planetary ball mill (manufactured by Fritsch GmbH, model number P-7) to obtain composite powder E.

Second-mixing

0.675 g of the composite powder E and 0.225 g of the solid electrolyte C, together with 34 g of zirconia ball having the diameter of 2 mm, were added to a 45 mL of zirconia pot, and it was sealed. They were mixed at a rotational speed of 600 rpm for an hour at room temperature using a rolling mill ("small ball mill frame", manufactured by Asahi Rika Seisakusho, model number: AV-1) to obtain a positive electrode mixture powder.

2. Measurement method and experiment method

(1) Energy dispersive X-Ray spectroscopy (SEM-EDS analysis) of electron microscope image and calculation of overlap rate of carbon and phosphorus

The SEM-EDS analysis was conducted in the same manner as in Example 1 to calculate the overlap rates.

(2) Powder X-ray diffraction (XRD) of positive electrode mixture powder

The XRD measurement was conducted in the same manner as in Example 1 to calculate the half widths of the diffraction peak B.

(3) Measurement experiment of weight reduction rate in heating treatment

The experiment was conducted in the same manner as in Example 1.

(4) Evaluation of battery properties

Preparation of negative electrode mixture

LTO (manufactured by ISHIHARA SANGYO KAISHA, LTD., "LT-112"), a conductive aid (manufactured by Denka Company Limited, "Li-100", powdered acetylene black) and a $Li_2S$-$P_2S_5$-LiCl-LiBr type solid electrolyte D were mixed in a mortar at a mass ratio of 60:5:35 for 5 minutes to obtain a LTO negative electrode mixture.

Production of lithium-ion battery (all-solid-state)

100 mg of the solid electrolyte A prepared using the above-described manner was pressure molded in a Macor cylinder having the diameter of 10 mm. The positive electrode mixture powder prepared above was added to be 5.04 mg of the sulfur amount on the pressure surface thereof, and it was molded with pressure again. 166 mg of the LTO negative electrode mixture was added on the pressure surface opposite to the positive electrode mixture, and it was pressurized. A Li foil having the diameter of 9 mm and the thickness of 0.1 mm was added thereon, and it was pressurized again to produce an all-solid-state battery.

The constant current charge and discharge test was conducted on the obtained all-solid-state battery. The voltage range of the constant current charge and discharge test was set to -0.4 to +1.3 V, and the current value was set as shown in Table 3 below. The value at the seventh cycle was measured under the conditions described below as the discharge capacity (per sulfur mass) at 0.5 C.

Table 3

| Cycle [-] | Current value [mA] | |
|---|---|---|
| | Discharge | Charge |
| 1,2 | 0.422 | 0.422 |
| 3 | 0.422 | 0.834 |
| 4 | 0.834 | 0.834 |
| 5 | 1.69 | 0.834 |
| 6 | 2.81 | 0.834 |
| 7 | 4.22 | 0.834 |

(Example 6)

First-mixing

0.75 g of the composite powder A and 0.25 g of the solid electrolyte A, together with ten zirconia balls having the diameter of 10 mm, were added to a 45 mL of zirconia pot, and it was sealed. Mixing treatment was conducted at room temperature for 20 hours at a rotational speed of 370 rpm by using a planetary ball mill (manufactured by Fritsch GmbH, model number P-7) to obtain composite powder F.

Second-mixing

0.72 g of the composite powder F and 0.18 g of the solid electrolyte C, together with 34 g of zirconia ball having the diameter of 2 mm, were added to a 45 mL of zirconia pot, and it was sealed. They were mixed at a rotational speed of 600 rpm for an hour at room temperature using a rolling mill ("small ball mill frame", manufactured by Asahi Rika Seisakusho, model number: AV-1) to obtain a positive electrode mixture powder. The obtained positive electrode mixture powder was subjected to the same measurement and experiment as in Example 5.

(Comparative Example 3)

0.54 g of the composite powder A obtained in the same manner as in Example 1 and 0.36 g of the solid electrolyte A obtained in the same manner as in Example 1, together with ten zirconia balls having the diameter of 10 mm, were added to a 45 mL of zirconia pot, and it was sealed. Mixing treatment was conducted at room temperature for 20 hours at a rotational speed of 370 rpm by using a planetary ball mill apparatus (manufactured by Fritsch GmbH, model number P-7) to obtain a positive electrode mixture powder. The obtained positive electrode mixture powder was subjected to the same measurement and experiment (the SEM-EDS measurement was excluded) as in Example 5.
The above results are shown in Table 4.

Table 4

| | Overlap rate of carbon and phosphorus | Diffraction peak A | Diffraction peak B | Half width of diffraction peak B [° ] | Weight reduction rate [%] | Weight reduction rate of sulfur-based active material [%] | Discharge capacity @0.5 C [mAh/g_s] |
|---|---|---|---|---|---|---|---|
| Example 5 | 90.9% | Present | Present | 0.54 | 5.86 | 13.9 | 414 |
| Example 6 | 99.6% | Present | Present | 0.53 | 5.26 | 12.5 | 412 |
| Comparative Example 3 | Measurement was omitted | Absent | Absent | - | 6.33 | 15.1 | 326 |

(Example 7)

1. Preparation of positive electrode mixture

(1)Preparation of solid electrolyte C

A solid electrolyte C was obtained in the same manner as in Example 5.

(2) Preparation of positive electrode mixture powder

First-mixing

0.7778 g of the composite powder A and 0.2222 g of the solid electrolyte A, together with ten zirconia balls having the diameter of 10mm, were added to a 45 mL of zirconia pot, and it was sealed. Mixing treatment was conducted at room temperature for 20 hours at a rotational speed of 370 rpm by using a planetary ball mill (manufactured by Fritsch GmbH, model number P-7) to obtain composite powder G.

Second-mixing

0.81 g of the composite powder G and 0.09 g of the solid electrolyte C, together with 34 g of zirconia ball having the diameter of 2 mm, were added to a 45 mL of zirconia pot, and it was sealed. They were mixed at a rotational speed of 600 rpm for an hour at room temperature using a rolling mill ("small ball mill frame", manufactured by Asahi Rika Seisakusho, model number: AV-1) to obtain a positive electrode mixture powder.

2. Measurement method and experiment method

(1) Energy dispersive X-Ray spectroscopy (SEM-EDS analysis) of electron microscope image and calculation of overlap rate of carbon and phosphorus

The SEM-EDS analysis was conducted in the same manner as in Example 1 to calculate the overlap rates.

(2) Powder X-ray diffraction (XRD) of positive electrode mixture powder

The XRD measurement was conducted in the same manner as in Example 1 to calculate the half widths of the diffraction peak B.

(3) Measurement experiment of weight reduction rate in heating treatment

The experiment was conducted in the same manner as in Example 1.

(4) Evaluation of battery properties

Preparation of negative electrode mixture

The LTO negative electrode mixture was obtained in the same manner as in Example 5.

Production of lithium-ion battery (all-solid-state)

100 mg of the solid electrolyte A prepared using the above-described manner was pressure molded in a Macor cylinder having the diameter of 10 mm. The positive electrode mixture powder prepared above was added to be 5.88 mg of the sulfur amount on the pressure surface thereof, and it was molded with pressure again. 166 mg of the LTO negative electrode mixture was added on the pressure surface opposite to the positive electrode mixture, and it was pressurized. A Li foil having the diameter of 9 mm and the thickness of 0.1 mm was added thereon, and it was pressurized again to produce an all-solid-state battery.

The constant current charge and discharge test was conducted on the obtained all-solid-state battery. The voltage range of the constant current charge and discharge test was set to -0.4 to +1.3 V, and the current value was set as shown in Table 5 below. The value at the sixth cycle was measured under the conditions described below as the discharge capacity (per sulfur mass) at 1/3 C.

Table 5

| Cycle [-] | Current value [mA] | |
|---|---|---|
| | Discharge | Charge |
| 1,2 | 0.492 | 0.422 |
| 3 | 0.422 | 0.983 |
| 4 | 0.983 | 0.983 |
| 5 | 1.97 | 0.983 |
| 6 | 3.28 | 0.983 |

(Comparative Example 4)

0.63 g of the composite powder A obtained in the same manner as in Example 1 and 0.27 g of the solid electrolyte A obtained in the same manner as in Example 1, together with ten zirconia balls having the diameter of 10 mm, were added to a 45 mL of zirconia pot, and it was sealed. Mixing treatment was conducted at room temperature for 20 hours at a rotational speed of 370 rpm by using a planetary ball mill apparatus (manufactured by Fritsch GmbH, model number P-7) to obtain a positive electrode mixture powder. The obtained positive electrode mixture powder was subjected to the same measurement and experiment (the SEM-EDS measurement was excluded) as in Example 7.

The above results are shown in Table 6.

Table 6

| | Overlap rate of carbon and phosphorus | Diffraction peak A | Diffraction peak B | Half width of diffraction peak B [° ] | Weight reduction rate [%] | Weight reduction rate of sulfur-based active material [%] | Discharge capacity @1/3 C [mAh/g$_s$] |
|---|---|---|---|---|---|---|---|
| Example 7 | 100% | Present | Present | 0.54 | 6.25 | 12.8 | 462 |
| Comparative Example 4 | Measurement was omitted | Absent | Absent | - | 5.76 | 11.8 | 322 |

(Evaluation)

In Examples 1 to 7, diffraction peaks A and B were observed, and the overlap rate of carbon and phosphorus was also maintained at a high level. This indicates that the mixture condition was good and the crystallinity of the solid electrolyte was maintained. As the result, it was found that they exhibited enhanced capacity (the capacities at 1 C in Examples 1 to 4, the capacities at 0.5 C in Examples 5 and 6, and the capacities at 1/3 C in Example 7) under the conditions of high current value and high rate, and they had excellent rate characteristics.

Industrial Applicability

The positive electrode mixture of the present invention is suitable as a positive electrode of lithium-ion battery. In addition, lithium-ion battery of the present invention is suitably used for, for example, information-related devices such as personal computers, video cameras, and mobile phones, communication devices, batteries used in vehicles such as electric vehicles, and the like.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) on the basis of which the present application claims Paris convention priority are incorporated herein by reference in its entirety.

**Claims**

1.   A positive electrode mixture comprising a conductive aid which is a carbon material, a sulfur-based active material, and a solid electrolyte,

    wherein a mapping overlap rate of carbon and phosphorus is 50% or more in elemental analysis using energy dispersive X-ray spectroscopy of an electron microscope image, and
    the positive electrode mixture has a diffraction peak A at $2\theta=20.2\pm0.5°$ and a diffraction peak B at $2\theta=41.1\pm0.8°$ in powder X-ray diffraction using CuK$\alpha$ ray.

2.   The positive electrode mixture according to claim 1, which has a half width of the diffraction peak B of 1.15° or less.

3.   The positive electrode mixture according to claim 1 or 2, wherein the solid electrolyte comprises a lithium atom, a phosphorus atom, a sulfur atom, a bromine atom and an iodine atom.

4.   The positive electrode mixture according to any one of claims 1 to 3, which has a weight reduction rate of 2.5% or more in the case where the heating treatment is conducted at 190°C for two hours.

5.   The positive electrode mixture according to any one of claims 1 to 4, which has a weight reduction rate of the sulfur-based active material of 7.0% or more in the case where the heating treatment is conducted at 190°C for two hours.

6. The positive electrode mixture according to any one of claims 1 to 5, which is obtained using a method for producing it comprising: adding a solid electrolyte to a sulfur-based active material and first-mixing them to obtain a first mixture, and adding a further solid electrolyte to the first mixture and second-mixing them to obtain a second mixture, wherein the second-mixing treatment is conducted with an energy smaller than that of the first-mixing treatment.

7. The positive electrode mixture according to claim 6, wherein they are mixed in first-mixing under the condition where amorphization of the solid electrolyte added in first-mixing is proceeded, and
they are mixed in second-mixing under the condition where the crystallinity of the solid electrolyte added in second-mixing does not disappear.

8. A method for producing a positive electrode mixture comprising:

   adding a solid electrolyte to a sulfur-based active material and first-mixing them to obtain a first mixture, and
   adding a further solid electrolyte to the first mixture and second-mixing them to obtain a second mixture,
   wherein the second-mixing treatment is conducted with an energy smaller than that of the first-mixing treatment.

9. The method for producing a positive electrode mixture according to claim 8,

   wherein they are mixed in first-mixing under the condition where amorphization of the solid electrolyte added in first-mixing is proceeded, and
   they are mixed in second-mixing under the condition where the crystallinity of the solid electrolyte added in second-mixing does not disappear.

10. The method for producing a positive electrode mixture according to claim 8 or 9, wherein the positive electrode mixture according to any one of claims 1 to 7 is produced.

11. A lithium-ion battery comprising the positive electrode mixture according to any one of claims 1 to 7.

Fig. 1

C                           P

(a)

(b)

Fig. 2

C                           P

(a)

(b)

Fig. 3

C P

(a)

(b)

Fig. 4

C P

(a)

(b)

Fig. 5

Fig. 6

Fig. 7

C                              P

(a)

(b)

Fig. 8

C                              P

(a)

(b)

Fig. 9

Fig. 10

Fig. 11

Fig. 12

Fig. 13

# EP 4 579 793 A1

## INTERNATIONAL SEARCH REPORT

| International application No. |
|---|
| **PCT/JP2023/030394** |

**A. CLASSIFICATION OF SUBJECT MATTER**

*H01M 4/136*(2010.01)i; *H01M 4/1397*(2010.01)i; *H01M 4/38*(2006.01)i; *H01M 4/62*(2006.01)i; *H01M 10/0562*(2010.01)n
FI: H01M4/136; H01M4/62 Z; H01M4/38 Z; H01M4/1397; H01M10/0562

According to International Patent Classification (IPC) or to both national classification and IPC

**B. FIELDS SEARCHED**

Minimum documentation searched (classification system followed by classification symbols)

H01M4/136; H01M4/1397; H01M4/38; H01M4/62; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2014-160572 A (NAGASE CHEMTEX CORP.) 04 September 2014 (2014-09-04) claims, paragraph [0044], examples | 1-11 |
| Y | JP 2015-011898 A (TOYOTA JIDOSHA KABUSHIKI KAISHA) 19 January 2015 (2015-01-19) claims, paragraphs [0013], [0042], examples | 1-11 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 November 2023** | **14 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2023/030394**

| Patent document cited in search report | | | | Publication date (day/month/year) | Patent family member(s) | | | Publication date (day/month/year) |
|---|---|---|---|---|---|---|---|---|
| JP | 2014-160572 | A | | 04 September 2014 | (Family: none) | | | |
| JP | 2015-011898 | A | | 19 January 2015 | US | 2016/0133989 | A1 | |
| | | | | | claims, paragraphs [0016], [0054], examples | | | |
| | | | | | US | 2018/0233775 | A1 | |
| | | | | | WO | 2014/208180 | A1 | |
| | | | | | KR | 10-2016-0005775 | A | |
| | | | | | CN | 105324821 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013258079 A

- JP 2013016423 A

**Non-patent literature cited in the description**

- **KANNO et al.** *Journal of The Electrochemical Sociey*, 2001, vol. 148 (7), A742-746
- *Solid State Ionics*, 2006, vol. 177, 2721-2725

- **S. J. SANG** ; **S. H. JOO** ; **R. RYOO**. *J. Am. Chem. Soc.*, 2000, vol. 122, 10712-10713
- **T. YOKOI** ; **Y. SAKAMOTO** ; **O. TERASAKI**. *J. Am. Chem. Soc.*, 2006, vol. 128, 13664-13665